# EUROPEAN PATENT APPLICATION

(11) **EP 4 836 548 A1**
(43) Date of publication of application: **04.11.2026**
(21) Application number: 23962553.6
(22) Date of filing: 26.12.2023
(51) Int. Cl.: H04W 64/00

(54) **INFORMATION INDICATION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); GUO, Yali, Dongguan, Guangdong 523860 (CN); YANG, Haorui, Dongguan, Guangdong 523860 (CN)
(74) Representative: Taor, Simon Edward William
(86) International application number: PCT/CN2023/141894
(87) International publication number: WO 2025/137858

(57) **Abstract**

A method and apparatus for information indication, a device, and a storage medium are provided, which relate to the field of communication technology. The method is performed by a first device. The method includes the following. First information sent by a first core network (CN) element is received, where the first information indicates at least one tracking area code (TAC) and/or at least one cell identifier allowed or authorized to be broadcasted by the first device (410). According to the above method, by means of a CN element indicating to the first device the at least one TAC and/or the at least one cell identifier allowed or authorized to be broadcasted by the first device, there is no need for an operator to manually configure a TAC and/or a cell identifier allowed or authorized to be broadcasted by the first device, achieving a more flexible and convenient configuration manner of the TAC and cell identifier.

## Description

### TECHNICAL FIELD

Embodiments of the disclosure relate to the field of communication technology, and in particular to a method and apparatus for information indication, a device, and a storage medium.

### BACKGROUND

In a communication network, terminal devices access a core network (CN) via access network (AN) devices, where different AN devices have different network coverage. In the related art, a manner of operation administration and maintenance (OAM) configuration is generally used for configuring a network coverage of the AN device. However, this manner requires an operator to perform operations such as maintenance and configuration on the network coverage of the AN device in the background, and thus flexible configuration of the network coverage of the AN device cannot be realized.

### SUMMARY

A method and apparatus for information indication, a device, and a storage medium are provided in embodiments of the disclosure. The technical solutions are as follows.

According to an aspect of embodiments of the disclosure, a method for information indication is provided. The method is performed by a first device and includes the following. First information sent by a first core network (CN) element is received. The first information indicates at least one tracking area code (TAC) and/or at least one cell identifier allowed or authorized to be broadcasted by the first device.

According to an aspect of embodiments of the disclosure, a method for information indication is provided. The method is performed by a first CN element and includes the following. First information is sent to a first device. The first information indicates at least one TAC and/or at least one cell identifier allowed or authorized to be broadcasted by the first device.

According to an aspect of embodiments of the disclosure, an apparatus for information indication is provided. The apparatus includes a receiving module. The receiving module is configured to receive first information sent by a first CN element. The first information indicates at least one TAC and/or at least one cell identifier allowed or authorized to be broadcasted by the first device.

According to an aspect of embodiments of the disclosure, an apparatus for information indication is provided. The apparatus includes a sending module. The sending module is configured to send first information to a first device. The first information indicates at least one TAC and/or at least one cell identifier allowed or authorized to be broadcasted by the first device.

The technical solutions provided in embodiments of the disclosure have the following beneficial effects.

By means of indicating, by a CN element, to the first device the at least one TAC and/or the at least one cell identifier allowed or authorized to be broadcasted by the first device, there is no need for an operator to manually configure a TAC and/or a cell identifier allowed or authorized to be broadcasted by the first device, thereby making a manner of configuring a TAC and a cell identifier more flexible and convenient.

### BRIEF DESCRIPTION OF THE DRAWINGS

FIG. 1 is a schematic diagram of a network architecture provided in an embodiment of the disclosure.
FIG. 2 is a schematic diagram of a 5th-generation (5G) system architecture provided in an embodiment of the disclosure.
FIG. 3 is a schematic diagram of a vehicle-mounted relay (VMR) scenario provided in an embodiment of the disclosure.
FIG. 4 is a flowchart of a method for information indication provided in an embodiment of the disclosure.
FIG. 5 is a flowchart of a method for information indication provided in another embodiment of the disclosure.
FIG. 6 is a flowchart of a method for information indication provided in another embodiment of the disclosure.
FIG. 7 is a flowchart of a method for information indication provided in another embodiment of the disclosure.
FIG. 8 is a block diagram of an apparatus for information indication provided in an embodiment of the disclosure.
FIG. 9 is a block diagram of an apparatus for information indication provided in another embodiment of the disclosure.
FIG. 10 is a schematic structural diagram of a first device provided in an embodiment of the disclosure.
FIG. 11 is a schematic structural diagram of a first core network (CN) element provided in an embodiment of the disclosure.

### DETAILED DESCRIPTION

In order to make the objectives, technical solutions, and advantages of the disclosure clearer, embodiments of the disclosure will be described in further detail below with reference to the accompanying drawings.

The network architecture and service scenario described in embodiments of the disclosure are intended to describe the technical solutions of embodiments of the disclosure more clearly, and do not constitute limitation on the technical solutions provided in embodiments of the disclosure. Those of ordinary skill in the art can appreciate that, with evolution of network architectures and emergence of new service scenarios, for similar technical problems, the technical solutions provided in embodiments of the disclosure are also applicable.

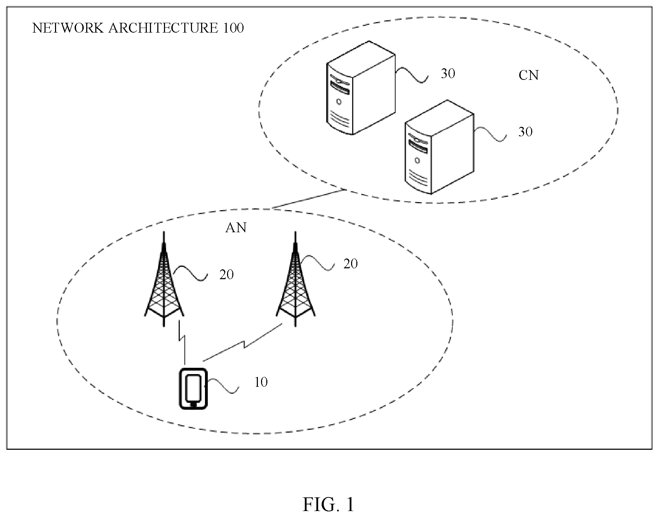

FIG. 1 is a schematic diagram of a network architecture 100 provided in an embodiment of the disclosure. The network architecture 100 may include a terminal device 10, an access network (AN) device 20, and a core network (CN) element 30.

The terminal device 10 may refer to a user equipment (UE), a station (STA), an access terminal, a subscriber unit, a subscriber station, a mobile station, a remote station, a remote terminal, a mobile device, a wireless communication device, a user agent, or a user device. In some embodiments, the terminal device 10 may also be a cellular radio telephone, a cordless telephone, a session initiation protocol (SIP) telephone, a wireless local loop (WLL) station, a personal digital assistant (PDA), a device with wireless communication functions such as a handheld device, a computing device, or other processing devices coupled with a wireless modem, a vehicle-mounted device, a wearable device, a terminal device in the 5th-generation system (5GS), or a terminal device in a future evolved public land mobile network (PLMN), or the like. Embodiments of the disclosure are not limited in this regard. For the convenience of illustration, the above devices are collectively referred to as the "terminal device". The number of terminal devices 10 is usually multiple, and there may be one or more terminal devices 10 in each cell managed by the AN device 20. The "terminal device" may also be referred to as a "terminal" or "UE" for short, and the meaning thereof can be understood by those skilled in the art.

The AN device 20 is a device deployed in an AN to provide a wireless communication function for the terminal device 10. The AN device 20 may include various forms of macro base stations, micro base stations, relay stations, access points (APs), and the like. In systems adopting different radio access technologies, devices having a function of the AN device may be in different names, for example, in a 5G new radio (NR) system, such a device is referred to as a gNodeB or a next generation Node B (gNB). With evolution of communication technologies, the name "AN device" may change. For the convenience of illustration, in embodiments of the disclosure, the above apparatus for providing a wireless communication function for the terminal device 10 is collectively referred to as the "AN device". In some embodiments, via the AN device 20, the terminal device 10 and the CN element 30 can establish a communication relationship. Exemplarily, in a long term evolution (LTE) system, the AN device 20 may be an evolved universal terrestrial radio access network (EUTRAN) or one or more eNodeB in the EUTRAN; and in the 5G NR system, the AN device 20 may be a radio access network (RAN) or one or more gNBs in the RAN. In embodiments of the disclosure, unless otherwise specified, the "network device" refers to the AN device 20, such as a base station.

The CN element 30 is a network element deployed in a CN. The functions of the CN element 30 are mainly to provide a user connection, manage a user, and complete service bearing, and the CN element 30 is used as an interface provided by a bearer network for an external network. For example, the CN element in the 5G NR system may include an access-and-mobility management function (AMF) entity, a user plane function (UPF) entity, a session management function (SMF) entity, and other network elements.

In some embodiments, the AN device 20 and the CN element 30 communicate with each other by using some air interface technology, such as an NG interface in the 5G NR system. The AN device 20 and the terminal device 10 communicate with each other by using some air interface technology, such as a Uu interface.

The "5G NR system" in embodiments of the disclosure may be also referred to as a 5G system or an NR system, but the meaning thereof can be understood by those skilled in the art. The technical solutions described in the embodiments of the disclosure may be applied to an LTE system, or may be applied to the 5G NR system, or may be applied to a future evolved system of the 5G NR system (for example, a beyond 5G (B5G) system or a 6th-generation (6G) system), or may be applied to other communication systems such as a narrow band internet of things (NB-IoT) system, which is not limited in the disclosure.

In embodiments of the disclosure, the network device can serve a cell, and the terminal device communicates with the network device over a transmission resource (for example, a frequency-domain resource, or referred to as spectrum resource) on a carrier used by the cell. The cell may be a cell corresponding to the network device (for example, a base station). The cell may belong to a macro base station, or may belong to a base station corresponding to a small cell. The small cell herein may include a metro cell, a micro cell, a pico cell, a femto cell, etc. These small cells are characterized by small coverage and low transmission power and are adapted to providing data transmission service with high-rate.

Before the technical solutions of the disclosure are introduced, some related art involved in the disclosure will be described. The related art below, as an optional scheme, can be arbitrarily combined with the technical solutions of embodiments of the disclosure, which shall all belong to the protection scope of embodiments of the disclosure. The embodiments of the disclosure include at least part of the following contents.

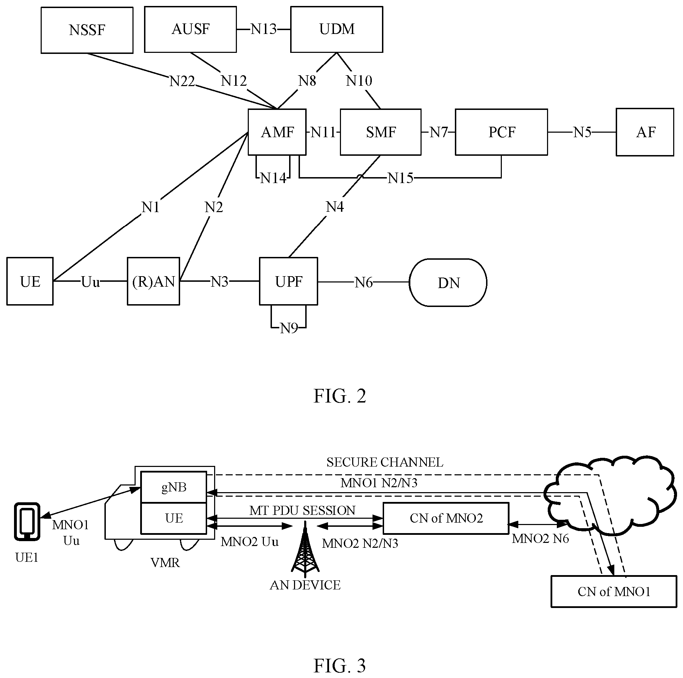

A 5G network system architecture is illustrated in FIG. 2. A UE performs access stratum (AS) connection with an AN through a Uu interface, to exchange AS messages and perform wireless data transmission. The UE performs non-access stratum (NAS) connection with an AMF through an N1 interface, to exchange NAS messages. The AMF is a mobility management function in a CN, and an SMF is a session management function in the CN. In addition to the mobility management for the UE, the AMF is also responsible for forwarding a session management-related message between the UE and the SMF. A policy control function (PCF) is a policy management function in the CN and is responsible for formulating policies related to mobility management, session management, and charging for the UE. A UPF is a user plane function in the CN, performs data transmission with an external data network (DN) through an N6 interface, and performs data transmission with the AN through an N3 interface. After the UE accesses the 5G network through the Uu interface, the UE establishes a protocol data unit (PDU) session under control of the SMF to perform data transmission.

To enhance the coverage of the AN device, a relay node may be used in the network, as illustrated in FIG. 3.

In FIG. 3, a terminal device (UE1 on the left) accesses a CN of mobile network operator1 (MNO1) via a gNB function in a vehicle-mounted relay (VMR). The VMR not only has the gNB function but also has a complete UE function. The UE function in the VMR is connected to a CN of MNO2 via an AN device. That is, the CN connected with UE1 on the left may be different from the CN connected with the UE function in the VMR. The VMR not only can serve as a UE to connect to the CN of MNO2, but also can serve as a gNB to enable UE1 to connect to the CN of MNO1, thereby enhancing the network coverage.

As can be seen from FIG. 3, the gNB function of the VMR is used for UE1 on the left. A tracking area code (TAC) and a cell identifier (for example, cell ID) of a conventional AN device are both configured via operation, administration and maintenance (OAM). Once the configuration is completed, the gNB can begin broadcasting. Operation, administration, and maintenance (OAM) refers to the practice of dividing the network management work into three categories: operation, administration, and maintenance according to actual operational requirements of a network operator. The operation is mainly to complete routine analysis, prediction, planning, and configuration for a network and a service, and the maintenance mainly refers to routine operation activities such as testing and fault management for the network and the service. Since the above work is completed by an operator in the background and requires manual configuration by the operator, real-time and flexible configuration of a network coverage of the AN device cannot be realized. Because of good mobility of the VMR, static configuration is apparently not suitable for configuring a TAC and a cell identifier of the gNB in the VMR. According to the technical solutions provided in embodiments of the disclosure, a tracking area (TA) and a cell identifier of the VMR can be dynamically managed, thereby providing a more flexible and convenient manner of configuring a TAC and a cell identifier to the gNB in the VMR.

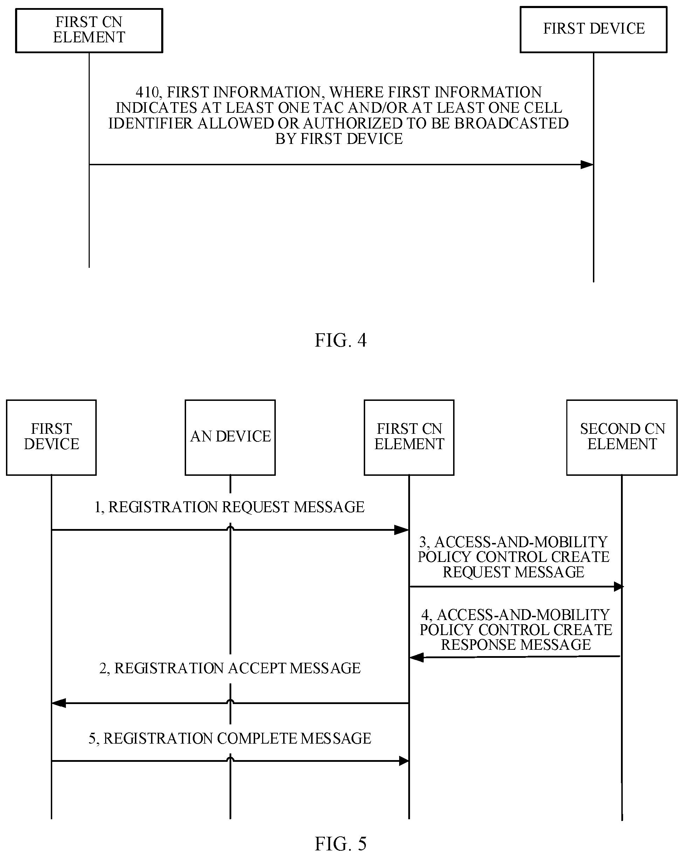

FIG. 4 is a flowchart of a method for information indication provided in an embodiment of the disclosure. The method is performed by a first device. The method includes operations at 410 below.

At 410, a first device receives first information sent by a first CN element, where the first information indicates at least one TAC and/or at least one cell identifier allowed or authorized to be broadcasted by the first device.

Accordingly, the first CN element sends the first information to the first device.

TA is a concept newly formulated for UE location management in a cellular communication system. When a UE is in an idle state, a CN can know a TA of the UE, and when the UE in the idle state needs to be paged, the CN shall perform paging in all cells of a registered TA of the UE. Multiple TAs form a TA list and are simultaneously allocated to one UE. When moving in the TA list, the UE does not need to perform mobility registration update, to reduce frequent interaction with the network. When entering a new TA which is not in the TA list registered by the UE, the UE needs to perform mobility registration update, and an AMF reallocates a group of TAs to the UE, where the newly-allocated TAs may also include some TAs in the original TA list. Each cell belongs to only one TA. The TA is a cell-level configuration. Multiple cells may be configured with the same TA, and one cell can belong to only one TA. In some embodiments, a TA may be identified by a TAC.

A cell is a basic unit of coverage in a cellular communication system. Since there are numerous cells, each cell needs to be distinguished by an identifier, which is referred to as a cell identifier. Only with the cell identifier can the concept of neighbouring cells be meaningful. The cell identifier is generally classified into two types: a physical identifier and a logical identifier. The physical identifier is generally simple and is only used in a wireless network, and the logical identifier needs to be used in an entire network and thus is relatively long. For example, in an LTE system, a physical identifier of the cell is referred to as a physical cell identifier (PCI), with values ranging from 0 to 503, which is only used in the wireless network and is a key parameter for cell reference signal, synchronization signal, and terminal measurement. A logical identifier of the cell is referred to as a cell identification (CID), which is a 28-bit binary number.

In some embodiments, the first device has mobility. Exemplarily, the first device is a mobile device such as a vehicle-mounted device or a mobile phone. As illustrated in FIG. 3, the first device may be a VMR in FIG. 3.

In some embodiments, the first device has functions of both a terminal device and an AN device. In other words, the first device may serve as the terminal device to establish a communication connection with another AN device, or may serve as the AN device to establish a communication connection with another terminal device. The another AN device herein refers to an AN device other than the first device, and the another terminal device refers to a terminal device other than the first device. In some embodiments, the first device may be a relay device, and a remote terminal may establish a communication connection with the CN via the first device.

In some embodiments, the first device may also be referred to as a relay device. In other words, the first device has a function of the relay device. This disclosure is not limited in this regard.

In some embodiments, the first information includes at least one of the following information: the at least one TAC allowed or authorized to be broadcasted by the first device, the at least one cell identifier allowed or authorized to be broadcasted by the first device, first single network slice selection assistance information (S-NSSAI), a first data network name (DNN), or geographical location information.

In some embodiments, the first information includes the at least one TAC allowed or authorized to be broadcasted by the first device.

In some embodiments, the first information includes the at least one cell identifier allowed or authorized to be broadcasted by the first device.

In some embodiments, the first information includes the at least one TAC allowed or authorized to be broadcasted by the first device and the at least one cell identifier allowed or authorized to be broadcasted by the first device.

In some embodiments, the first information includes the at least one TAC allowed or authorized to be broadcasted by the first device, the at least one cell identifier allowed or authorized to be broadcasted by the first device, and the geographical location information.

In some embodiments, the first information includes the first S-NSSAI and/or the first DNN.

In some embodiments, the first information includes the first S-NSSAI, the first DNN, and the geographical location information.

In some embodiments, the first S-NSSAI is an S-NSSAI respectively corresponding to the at least one TAC and/or the at least one cell identifier allowed or authorized to be broadcasted by the first device.

For the cellular communication system, a network slice is mainly embodied in admission control, network selection, and resource separation, which is mainly identified by an S-NSSAI parameter in the standard. Slice/service type (SST) indicates a slice and service type of S-NSSAI, and sst-slice differentiator (SD) is a component of the S-NSSAI parameter. The SST field has standardized and non-standardized values, but an S-NSSAI with a non-standardized value shall not be used by the UE in AS procedures. Values 0 to 127 belong to the standardized SST range. Values 128 to 255 belong to the operator-specific range. The SD field has a reserved value "no SD value associated with the SST" defined as hexadecimal FFFFFF. In certain protocols, the SD field is not included to indicate that no SD value is associated with the SST. The SST refers to the expected network slice behaviour in terms of features and services. The SD is optional information that complements the SST(s) to differentiate amongst multiple network slices of the same SST.

In some embodiments, there is an association relationship between the TAC and/or cell identifier and the S-NSSAI. When the TAC and/or cell identifier is known, corresponding S-NSSAI may be obtained. When the S-NSSAI is known, a corresponding TAC and/or cell identifier may be obtained.

In some embodiments, the first DNN is a DNN respectively corresponding to the at least one TAC and/or the at least one cell identifier allowed or authorized to be broadcasted by the first device.

DNNs in 5GS and access point names (APNs) in 4G may be mapped to one another. Thus the description, definition, and usage of the APN in the specification are equivalent to the description, definition, and usage of the DNN. The DNN or APN is composed of two parts: 1) network identification (ID), which indicates an external network and is mandatory; and 2) operator ID, which indicates an operator to which the DNN or APN belongs and is optional.

Network ID: The network ID contains at least one label and has a maximum length of 63 octets. The network ID shall not start with any of the strings "rac", "lac", "sgsn", "rnc", etc., shall not end with ".gprs", and further, shall not take the value "*".

Operator ID: The operator ID is composed of three labels. The last label (or domain) shall be ".gprs". The first and second labels together shall uniquely identify the PLMN. For each operator, there is a default DNN/APN operator ID. This default operator ID is derived from the international mobile subscriber identity (IMSI) as follows: "mnc<MNC>.mcc<MCC>.gprs". For a scenario of roaming with local breakout (LBO) (i.e., in the case where a packet data network (PDN) gateway (PGW)/UPF in a visited PLMN (VPLMN) provides a service of accessing an external network), the operator ID of the DNN/APN shall be a network ID of the VPLMN.

In some embodiments, there is an association relationship between the TAC and/or cell identifier and the DNN. When the TAC and/or cell identifier is known, a corresponding DNN may be obtained. When the DNN is known, a corresponding TAC and/or cell identifier may be obtained.

In some embodiments, the geographical location information includes at least one of: a TAC of an AN device connected with the first device, a cell identifier of the AN device connected with the first device, or longitude and latitude coordinates of a location of the first device.

In some embodiments, the geographical location information is geographical location information of the first device.

In some embodiments, the AN device connected with the first device is a second device. The second device may have a function of only the AN device, or may have functions of both the terminal device and the AN device, which is not limited in the disclosure. For the first device, the second device is the AN device, so the second device is referred to as the AN device connected with the first device.

In some embodiments, the first CN element is an AMF.

In some embodiments, after the operations at 410, the method further includes operations at 420 below.

At 420, the first device broadcasts the at least one TAC and/or the at least one cell identifier.

In some embodiments, after receiving the first information, the first device may broadcast the at least one TAC and/or the at least one cell identifier indicated in the first information. Another terminal device (a terminal device other than the first device) may use the first device as an AN device, to access the CN by using the at least one TAC and/or the at least one cell identifier broadcasted by the first device.

In some embodiments, if the first information includes first S-NSSAI and/or a first DNN, the first device may determine, according to the first S-NSSAI and/or the first DNN, a TAC and/or a cell identifier allowed or authorized to be broadcasted by the first device, and then the first device broadcasts the TAC and/or the cell identifier allowed or authorized to be broadcasted.

In some embodiments, if the first information includes first S-NSSAI and/or a first DNN, the operations at 420 may be replaced with operations at 421 below.

At 421, the first device broadcasts the first S-NSSAI and/or the first DNN.

In some embodiments, another terminal device (a terminal device other than the first device) may determine, according to the first S-NSSAI and/or the first DNN, a TAC and/or a cell identifier allowed or authorized to be broadcasted by the first device.

According to the technical solutions provided in embodiments of the disclosure, by means of indicating, by a CN element, to the first device the at least one TAC and/or the at least one cell identifier allowed or authorized to be broadcasted by the first device, there is no need for an operator to manually configure the TAC and/or the cell identifier allowed or authorized to be broadcasted by the first device, achieving a more flexible and convenient manner of configuring a TAC and a cell identifier.

In some embodiments, the first information may be carried in any message sent by the first CN element to the first device. Exemplarily, the first information may be carried in a registration accept message sent by the first CN element to the first device, or may be carried in a downlink NAS transport message sent by the first CN element to the first device, or may be carried in a PDU session establishment accept message sent by the first CN element to the first device.

In view of this, the embodiments of the disclosure provide corresponding implementations based on the above three exemplary schemes.

Scheme 1: The first information is carried in a registration accept message

In some embodiments, the first information is carried in a registration accept message corresponding to a registration request message. The registration request message is sent by the first device and is used for requesting to initiate a registration procedure.

In some embodiments, the registration accept message may also be referred to as a registration response message.

It may be noted that, the accept messages mentioned in embodiments of the disclosure may all be referred to as response messages. For example, the registration accept message may be referred to as a registration response message, and the PDU session establishment accept message may be referred to as a PDU session establishment response message.

FIG. 5 is a flowchart of a method for information indication provided in an embodiment of scheme 1. The method may include at least one of the following steps 1 and 2.

Step 1, the first device sends a registration request message to the first CN element. The registration request message is used for initiating a registration procedure.

Accordingly, the first CN element receives the registration request message sent by the first device.

In some embodiments, the above registration request message may be used for initiating an initial registration procedure or may be used for initiating a mobility registration procedure, which is not limited in the disclosure.

In some embodiments, the registration request message carries a user identifier and a registration type. In some embodiments, the registration type includes at least one of: initial registration, mobility registration, or periodic registration.

In some embodiments, the user identifier is used for uniquely identifying the first device. In some embodiments, the user identifier may be a subscription concealed identifier (SUCI) or a temporary identity of the first device, which is not limited in the disclosure. If the user identifier is an SUCI, then after obtaining the user identifier, the first CN element needs to parse the SUCI to obtain a subscription permanent identifier (SUPI).

The SUCI is composed of the following parts.
(1) SUPI type, ranging from 0 to 7. It identifies the type of the SUPI concealed in the SUCI. The following values are defined:
   - 0: international mobile subscriber identification number (IMSI)
   - 1: network specific identifier (NSI)
   - 2: global line identifier (GLI)
   - 3: global cable identifier (GCI)
   - 4 to 7: spare values for future use
(2) Home network identifier (HNI), identifying the home network of the subscriber.

When the SUPI type is an IMSI, the HNI is composed of two parts:
mobile country code (MCC), consisting of three decimal digits. The MCC identifies uniquely the country of domicile of the mobile subscription;
mobile network code (MNC), consisting of two or three decimal digits. The MNC identifies the home PLMN or stand-alone non-public network (SNPN) of the mobile subscription.

When the SUPI type is an NSI, a GLI, or a GCI, the HNI consists of a string of characters with a variable length.

The SUPI is a 5G concept and equivalent to an IMSI in LTE, with the same format and size as the IMSI. However, different from the IMSI, this subscription permanent identity information never appears on an air interface, and what appears on the air interface is always the SUCI.

Step 2, the first CN element sends a registration accept message to the first device. The registration accept message indicates acceptance of the registration request from the first device.

Accordingly, the first device receives the registration accept message sent by the first CN element.

In some embodiments, the registration accept message carries the first information.

In some embodiments, the first information may be determined and then sent by the first CN element to the first device, or may be indicated by another CN element to the first CN element and then sent by the first CN element to the first device, which is not limited in the disclosure.

In some embodiments, the registration accept message further contains a 5G-globally unique temporary UE identity (GUTI) and a registration area.

The 5G-GUTI is a 5G-globally unique temporary UE identity, which can reduce explicit use of a permanent identifier of a UE in communication and improve security.

In some embodiments, the registration area refers to a registration area of the first device. In some embodiments, the registration area includes at least one TA and/or at least one cell.

In some embodiments, the first information is indicated by another CN element to the first CN element and then sent by the first CN element to the first device. Before step 2, the method further includes the following steps 3 and 4.

Step 3, the first CN element sends a second message to a second CN element. The second message is used for requesting policy information related to access-and-mobility management.

Accordingly, the second CN element receives the second message sent by the first CN element.

In some embodiments, the second message is an access-and-mobility policy control create request message. In some embodiments, the second message is Npcf_AMPolicyControl Create Request.

In some embodiments, the second CN element is a PCF.

In some embodiments, the second message may be referred to as an Npcf_AMPolicyControl Create Request message.

In some embodiments, the second message contains at least one of: an SUPI of the first device, an access type, location information, or a PLMN ID.

In some embodiments, the access type includes at least one of: 3rd generation partnership project (3GPP) access or non-3GPP access.

The 5G CN supports non-3GPP access networks (for example, wireless local area network (WLAN) access). A non-3GPP access network shall be connected to the 5G CN via a non-3GPP interworking function (N3IWF). The N3IWF interfaces with the 5G CN CP and UP functions via the N2 and N3 interfaces, respectively. If a selected N3IWF is located in the same PLMN as the 3GPP access, a UE simultaneously connected to the same 5G CN of a PLMN over the 3GPP access and the non-3GPP access shall be served by the same AMF.

In some embodiments, the location information refers to location information of the first device. In some embodiments, the location information of the first device may be reported by the first device to the first CN element, or may be obtained by the first CN element through measurement based on communication with the first device, which is not limited in the disclosure. In some embodiments, the location information of the first device is added by an AN device to the registration request message sent by the first device. In some embodiments, communication between the first device and the first CN element is forwarded by the AN device. During forwarding of related information or message, the AN device may process the information or message (for example, adding new information).

When a UE is powered on, a primary task of the UE is to search for a network and perform registration, i.e., a network selection operation. The network selection operation of the UE may be divided into two processes: PLMN selection and cell search. During the PLMN selection, the UE maintains some PLMN lists, where PLMNs are prioritized in these PLMN lists. Then, the UE performs a downward search from a high priority. The priority order is: a registered PLMN (RPLMN), a home PLMN (HPLMN), a user controlled PLMN (UPLMN), an operator controlled PLMN (OPLMN), and a VPLMN. Except for the VPLMN, each type of PLMN list stores a corresponding radio access technology (RAT), which identifies a global system of mobile communication (GSM)/general packet radio service (GPRS) technology, a universal mobile telecommunication system (UMTS) technology, or an evolved universal terrestrial radio access (E-UTRA) technology, to determine which access technology takes priority under the same PLMN. Different PLMNs are distinguished by PLMN IDs.

Step 4, the first CN element receives a first message sent by the second CN element. The first message indicates policy information related to access-and-mobility management.

Accordingly, the second CN element sends the first message to the first CN element.

In some embodiments, the first message is an access-and-mobility policy control create response message. In some embodiments, the first message is Npcf_AMPolicyControl Create Response.

In some embodiments, the policy information related to access-and-mobility management includes at least one of: a TAC allowed or authorized to be broadcasted by the first device, a cell identifier allowed or authorized to be broadcasted by the first device, first S-NSSAI, or a first DNN.

In some embodiments, after step 2, the method further includes the following step 5.

Step 5, the first device sends a registration complete message to the first CN element. The registration complete message is used for confirming that the 5G-GUTI configured in the registration accept message has taken effect.

In some embodiments, after completing registration, the first device establishes a PDU session with the first CN element based on the at least one TAC and/or the at least one cell identifier indicated in the first information. Exemplarily, the first device sends a PDU session establishment request message to the first CN element, where the PDU session establishment request message is used for requesting establishment of a PDU session with the first CN element.

In some embodiments, if the first information includes first S-NSSAI and a first DNN, the PDU session is established based on the first S-NSSAI and the first DNN indicated in the first information.

In some embodiments, after completing registration, the first device performs broadcasting based on the at least one TAC and/or the at least one cell identifier indicated in the first information. In other words, after completing registration, the first device broadcasts the at least one TAC and/or the at least one cell identifier indicated in the first information.

In some embodiments, if the first information includes first S-NSSAI and a first DNN, broadcasting is performed based on the first S-NSSAI and the first DNN indicated in the first information. In other words, after completing registration, the first device broadcasts the first S-NSSAI and the first DNN.

In some embodiments, the first device completing registration refers to the first device receiving the registration accept message sent by the first CN element.

It may be noted that, step 1 and steps 3 to 5 mentioned in the above embodiment are optional. Any one or more of step 1 or steps 3 to 5 mentioned in the above embodiment may be combined with step 2 to form new embodiments, all of which fall within the protection scope of the disclosure. Exemplarily, step 2 is combined with step 1 to obtain a new embodiment. Exemplarily, steps 1 to 4 are combined to form a new embodiment.

According to the above method, the first device may obtain, from the registration accept message, the at least one TAC and/or the at least one cell identifier allowed or authorized to be broadcasted by the first device, thereby making a manner of configuring a TAC and a cell identifier more flexible and convenient.

Scheme 2: The first information is carried in a downlink NAS transport message

In some embodiments, the first information is carried in a downlink NAS transport message. The downlink NAS transport message indicates policy data of the first device.

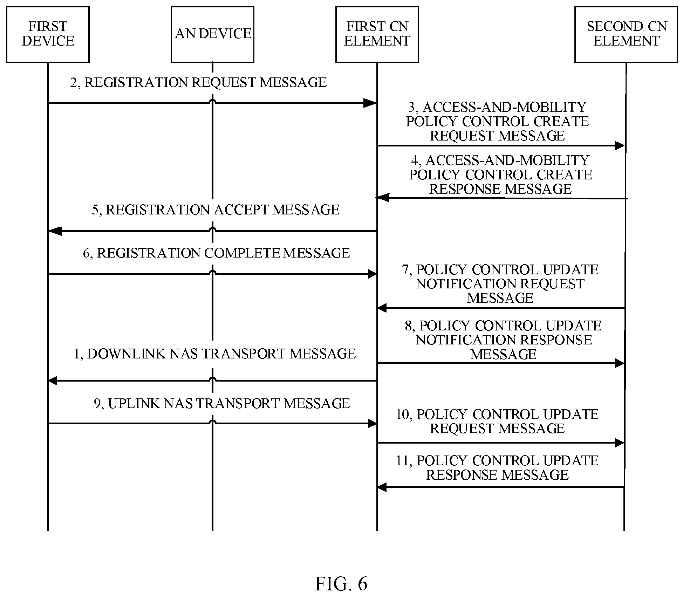

FIG. 6 is a flowchart of a method for information indication provided in an embodiment of scheme 2. The method may include the following step 1.

Step 1, the first CN element sends a downlink NAS transport message to the first device. The downlink NAS transport message indicates policy data of the first device.

Accordingly, the first device receives the downlink NAS transport message sent by the first CN element.

In some embodiments, the downlink NAS transport message contains at least one of: a TAC allowed or authorized to be broadcasted by the first device, a cell identifier allowed or authorized to be broadcasted by the first device, first S-NSSAI, a first DNN, or the policy data of the first device. The first S-NSSAI is an S-NSSAI respectively corresponding to the at least one TAC and/or the at least one cell identifier allowed or authorized to be broadcasted by the first device, and the first DNN is a DNN respectively corresponding to the at least one TAC and/or the at least one cell identifier allowed or authorized to be broadcasted by the first device.

In some embodiments, after receiving the downlink NAS transport message sent by the first CN element, the first device establishes a PDU session with the first CN element based on the at least one TAC and/or the at least one cell identifier indicated in the first information. Exemplarily, the first device sends a PDU session establishment request message to the first CN element, where the PDU session establishment request message is used for requesting establishment of a PDU session with the first CN element.

In some embodiments, if the first information includes first S-NSSAI and a first DNN, the PDU session is established based on the first S-NSSAI and the first DNN indicated in the first information.

In some embodiments, after receiving the downlink NAS transport message sent by the first CN element, the first device performs broadcasting based on the at least one TAC and/or the at least one cell identifier indicated in the first information. In other words, after receiving the downlink NAS transport message sent by the first CN element, the first device broadcasts the at least one TAC and/or the at least one cell identifier indicated in the first information.

In some embodiments, if the first information includes first S-NSSAI and a first DNN, broadcasting is performed based on the first S-NSSAI and the first DNN indicated in the first information. In other words, after receiving the downlink NAS transport message sent by the first CN element, the first device broadcasts the first S-NSSAI and the first DNN.

In some embodiments, before step 1, the method further includes at least one of the following steps 2 to 8.

Step 2, the first device sends a registration request message to the first CN element. The registration request message is used for initiating a registration procedure.

Step 3, the first CN element sends a second message to a second CN element. The second message is used for requesting policy information related to access-and-mobility management.

In some embodiments, the second message is an access-and-mobility policy control create request message. In some embodiments, the second message is Npcf_AMPolicyControl Create Request.

Step 4, the second CN element sends a first message to the first CN element. The first message indicates policy information related to access-and-mobility management.

In some embodiments, the first message is an access-and-mobility policy control create response message. In some embodiments, the first message is Npcf_AMPolicyControl Create Response.

Step 5, the first CN element sends a registration accept message to the first device. The registration accept message indicates acceptance of the registration request from the first device.

Step 6, the first device sends a registration complete message to the first CN element. The registration complete message is used for confirming that a 5G-GUTI configured in the registration accept message has taken effect.

For a detailed introduction to the above steps 2 to 6, reference can be made to the introduction to steps 1 to 5 in scheme 1 in the above embodiment, which will not be repeated in the disclosure. Different from steps 1 to 5 in scheme 1 in the above embodiment, the policy control create response message in step 2 and the registration accept message in step 5 do not carry the first information.

Step 7, the first CN element sends a policy control update notification request message to the second CN element.

In some embodiments, the policy control update notification request message contains policy data of the first device. The policy data of the first device includes a UE route selection policy (URSP) rule. The URSP rule may carry an indication parameter.

In some embodiments, the policy control update notification request message may be referred to as Npcf_UEPolicyControl Create Request.

Step 8, the second CN element sends policy control update notification response information to the first CN element.

The policy control update notification response information corresponds to the policy control update notification request message in step 7 and indicates that the second CN element accepts the policy update notification request from the first CN element.

In some embodiments, the policy control update notification response information may be referred to as Npcf_UEPolicyControl Create Response.

In some embodiments, after step 1, the method further includes at least one of the following steps 9 to 11.

Step 9, the first device sends an uplink NAS transport message to the first CN element. The uplink NAS transport message is used for confirming that the policy data of the first device is successfully received.

Step 10, the first CN element sends a policy control update request message to the second CN element. The policy control update request message is used for confirming that the policy data of the first device is successfully received.

In some embodiments, the policy control update request message may be referred to as Npcf_UEPolicyControl UpdateNotify Request.

Step 11, the second CN element sends a policy control update response message to the first CN element. The policy control update response message is used for confirming that the policy control update request message is received.

In some embodiments, the policy control update response message may be referred to as Npcf_UEPolicyControl UpdateNotify Response.

It may be noted that, steps 2 to 11 mentioned in the above embodiment are optional. Any one or more of steps 2 to 11 mentioned in the above embodiment may be combined with step 1 to form new embodiments, all of which fall within the protection scope of the disclosure. Exemplarily, step 2, step 5, and step 6 are combined with step 1 to obtain a new embodiment. Exemplarily, step 1 is combined with step 9 to obtain a new embodiment.

According to the above method, the first device may obtain, from the downlink NAS transport message, the at least one TAC and/or the at least one cell identifier allowed or authorized to be broadcasted by the first device, without a need for an operator to manually configure a TAC and/or a cell identifier allowed or authorized to be broadcasted by the first device, thereby making a manner of configuring a TAC and a cell identifier more flexible and convenient.

Scheme 3: The first information is carried in a PDU session establishment accept message

In some embodiments, the first information is carried in a PDU session establishment accept message. The PDU session establishment accept message indicates that the first CN element accepts the PDU session establishment request from the first device.

In some embodiments, the first information is carried in a protocol configuration option (PCO); or, the first information is carried in a downlink NAS transport message. In other words, the first information may be carried in the PCO and sent to the first device, or the first information may be carried in the downlink NAS transport message and sent to the first device. In some embodiments, the PDU session establishment accept message is carried in the PCO and sent to the first device. In some embodiments, the PDU session establishment accept message is carried in the downlink NAS transport message and sent to the first device.

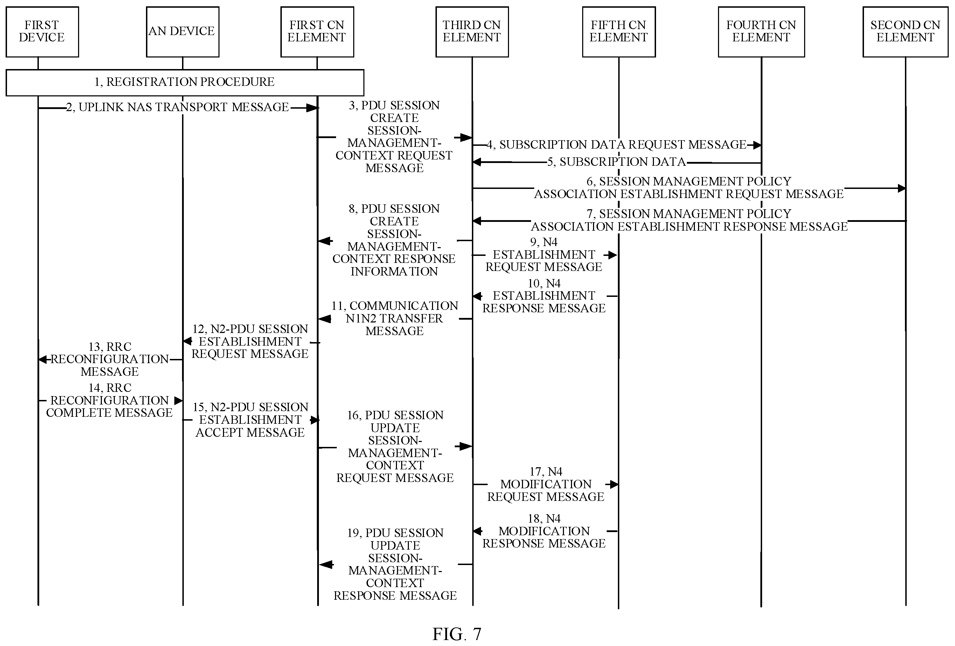

FIG. 7 is a flowchart of a method for information indication provided in an embodiment of scheme 3. The method may include at least one of the following steps 1 to 19.

Step 1, the first device initiates a registration procedure.

In some embodiments, a network allocates a 5G-GUTI to the first device during the registration procedure.

For the registration procedure, reference can be made to the introduction in scheme 1 above, which will not be repeated in this embodiment of the disclosure. Compared with the steps in scheme 1, in this embodiment, the first CN element does not indicate the first information to the first device during the registration procedure.

Step 2, the first device sends an uplink NAS transport message to the first CN element.

In some embodiments, when the first device needs to send data, the first device requests to establish a PDU session. In some embodiments, the uplink NAS transport message contains at least one of: a PDU session identifier, second S-NSSAI, a second DNN, a request type, or a PDU session establishment request message.

In some embodiments, the second S-NSSAI and the second DNN are different from the first S-NSSAI and the first DNN in the above embodiment, respectively. In some embodiments, if related S-NSSAI and/or DNN is pre-configured or pre-stored in the first device, then the second S-NSSAI may be S-NSSAI pre-configured or pre-stored in the first device, and the second DNN may be a DNN pre-configured or pre-stored in the first device. In some embodiments, if no related S-NSSAI and/or DNN is pre-configured or pre-stored in the first device, then the uplink NAS transport message may not carry the second S-NSSAI and/or the second DNN, and the first CN element may use default S-NSSAI as the second S-NSSAI and use a default DNN as the second DNN.

In some embodiments, the PDU session identifier is used for uniquely identifying a PDU session.

In some embodiments, a PDU session request message contains at least one of: a PDU session identifier or a PDU session type.

In some embodiments, the PDU session identifier in the PDU session request message is the same as the PDU session identifier in the uplink NAS transport message.

In some embodiments, the first CN element is an AMF.

Step 3, the first CN element selects a third CN element according to the second S-NSSAI and/or the second DNN, and sends a PDU session create session-management-context request message to the third CN element.

In some embodiments, the third CN element is an SMF. One SMF may manage one or more PDU sessions.

In some embodiments, the PDU session create session-management-context request message may be referred to as Nsmf_PDUsession_CreateSMcontext Request.

In some embodiments, the PDU session create session-management-context request message contains at least one of: a PDU session identifier, an access-and-mobility management network element identifier, or a PDU session establishment request message.

Step 4, the third CN element sends a subscription data request message to a fourth CN element.

In some embodiments, the subscription data request message is used for obtaining subscription data. In some embodiments, the subscription data request message contains at least one of: second S-NSSAI or a second DNN.

In some embodiments, this request does not contain a message body but contains a query parameter.

In some embodiments, the query parameter includes selected S-NSSAI, DNN, and PLMN ID information. All the three query parameters are optional. If the query parameters S-NSSAI and DNN are not included, a unified data management (UDM) may return all DNNs for all slices. If only DNN is included, the UDM may return DNN configurations for all slices available under that DNN. If only S-NSSAI is included and DNN is not included, the UDM may return all DNN configurations for that slice. If PLMN ID information is not carried, the UDM may return only a configuration of a HPLMN associated with the S-NSSAI or DNN.

It is necessary to focus on the S-NSSAI and DNN. If the S-NSSAI includes only SST and does not include SD, the UDM may assume that any SD value matches this slice query parameter. In addition, the DNN in the query parameter shall be a subscribed DNN of a UE, and otherwise, this query request may fail, and the UDM may directly reply with "404 Not Found". If the SMF receives from the AMF a PDU session establishment request in which a DNN selection mode is a wildcard DNN, then the SMF also needs to include the wildcard DNN in the query parameter. As such, the SMF also downloads session subscription data of the wildcard DNN during downloading of the subscription data.

In some embodiments, the fourth CN element is a UDM.

Step 5, the fourth CN element sends the subscription data to the third CN element.

In some embodiments, the subscription data includes at least one of: an allowed PDU session type or a default quality of service (QoS) parameter.

In some embodiments, the allowed PDU session type refers to a type of PDU sessions allowed for the first device.

Step 6, the third CN element sends a session management policy association establishment request message to a second CN element.

Step 7, the second CN element sends a session management policy association establishment response message to the third CN element.

In some embodiments, the session management policy association establishment response message contains a default policy and charging control (PCC) rule.

Step 8, the third CN element sends a PDU session create session-management-context response information to the first CN element.

In some embodiments, the PDU session create session-management-context response information may be referred to as Nsmf_PDUsession_CreateSMcontext Response.

In some embodiments, the PDU session create session-management-context response information includes an SMF context identifier.

Step 9, the third CN element selects a fifth CN element and sends an N4 establishment request message to the fifth CN element.

In some embodiments, the N4 establishment request message contains at least one of: a PDU session identifier, a QoS flow identifier, or a QoS parameter. Within the 5GS, for establishing a PDU session, a flow with a default QoS rule is established together and remains established throughout the lifetime of the session (similar to a default bearer in 4G evolved packet core (EPC)). This default flow should be a non-guaranteed bit rate (GBR) QoS flow, i.e., a flow with a non-guaranteed rate, which has relatively low resource requirements and transmits only a small amount of control information. If a GBR QoS flow is required, establishment of a dedicated bearer or a dedicated connection needs to be initiated.

A QoS flow is not only a connection channel for a PDU session, but is closely related to QoS. The QoS flow is associated with a set of QoS service characteristics and parameters and is a connection channel with QoS characteristics. Other flows within the same PDU session may have different QoS characteristics.

Step 10, the fifth CN element sends an N4 establishment response message to the third CN element.

In some embodiments, the N4 establishment request response message contains at least one of: a tunnel endpoint identifier (TEID) or an internet protocol (IP) address allocated by the fifth CN element.

Step 11, the third CN element sends a communication N1N2 transfer message to the first CN element.

In some embodiments, the communication N1N2 transfer may be referred to as Namf_Communication_N1N2Message Transfer.

In some embodiments, the communication N1N2 transfer message contains at least one of: a PDU session identifier, a PDU session establishment accept message, or an N2-PDU session establishment request message.

In some embodiments, the PDU session establishment accept message contains at least one of: the at least one TAC allowed or authorized to be broadcasted by the first device, the at least one cell identifier allowed or authorized to be broadcasted by the first device, first S-NSSAI, a first DNN, a PDU session identifier, a QoS flow identifier, a QoS parameter, or a QoS rule. The first S-NSSAI is an S-NSSAI respectively corresponding to the at least one TAC and/or the at least one cell identifier allowed or authorized to be broadcasted by the first device, and the first DNN is a DNN respectively corresponding to the at least one TAC and/or the at least one cell identifier allowed or authorized to be broadcasted by the first device.

Step 12, the first CN element forwards the N2-PDU session establishment request message to an AN device. The first CN element forwards the PDU session establishment accept message to the first device via a downlink NAS transport message.

In some embodiments, the AN device is a next generation radio access network (NG-RAN).

In some embodiments, the first CN element may also forward the PDU session establishment accept message to the first device via a PCO.

Step 13, the AN device sends a radio resource control (RRC) reconfiguration message to the first device. The RRC reconfiguration message carries an NAS container-PDU session establishment accept message.

Step 14, the first device sends an RRC reconfiguration complete message to the AN device.

Step 15, the AN device sends an N2-PDU session establishment accept message to the first CN element.

In some embodiments, the N2-PDU session establishment accept message contains at least one of: a PDU session identifier, a TEID, or an IP address allocated by the AN device. In LTE, among GTP tunnels for communication between two nodes based on a GPRS tunneling protocol (GTP), each GTP tunnel is identified in a node with an IP address, a user datagram protocol (UDP) port, and a TEID. After the GTP tunnel is established, when a sending node sends a GTP message to a receiving node, that GTP message header carries a TEID value allocated by the receiving node.

Step 16, the first CN element forwards the N2-PDU session establishment accept message to the third CN element via a PDU session update session-management-context request message.

In some embodiments, the PDU session update session-management-context request message may be referred to as Nsmf_PDUsession_UpdateSMcontext Request.

Step 17, the third CN element sends an N4 modification request message to the fifth CN element.

In some embodiments, the fifth CN element is a UPF.

In some embodiments, the N4 modification request message contains at least one of: a TEID or an IP address allocated by the AN device.

Step 18, the fifth CN element sends an N4 modification response message to the third CN element.

Step 19, the third CN element sends a PDU session update session-management-context response message to the first CN element.

In some embodiments, the PDU session update session-management-context response message may be referred to as Nsmf_PDUsession_UpdateSMcontext Response.

In some embodiments, after receiving the PDU session establishment accept message sent by the first CN element, the first device performs broadcasting based on the at least one TAC and/or the at least one cell identifier indicated in the first information. In other words, after receiving the PDU session establishment accept message sent by the first CN element, the first device broadcasts the at least one TAC and/or the at least one cell identifier indicated in the first information.

In some embodiments, if the first information includes first S-NSSAI and a first DNN, broadcasting is performed based on the first S-NSSAI and the first DNN indicated in the first information. In other words, after receiving the PDU session establishment accept message sent by the first CN element, the first device broadcasts the first S-NSSAI and the first DNN.

It may be noted that, steps 1 to 11 and steps 13 to 19 mentioned in the above embodiment are optional. Any one or more of steps 1 to 11 or steps 13 to 19 mentioned in the above embodiment may be combined with step 12 to form new embodiments, all of which fall within the protection scope of the disclosure. Exemplarily, step 11 is combined with step 12 to obtain a new embodiment. Exemplarily, steps 9 to 11 are combined with step 12 to obtain a new embodiment.

According to the above method, the first device may obtain, from the PDU session establishment accept message, the at least one TAC and/or the at least one cell identifier allowed or authorized to be broadcasted by the first device, without a need for an operator to manually configure a TAC and/or a cell identifier allowed or authorized to be broadcasted by the first device, thereby making a manner of configuring a TAC and a cell identifier more flexible and convenient.

In the above method embodiments, the technical solutions of the disclosure are described only from the perspective of interaction between the first device and the first CN element. The above steps performed by the first device may be implemented separately as a method for wireless communication at a first device side. The above steps performed by the first CN element may be implemented separately as a method for wireless communication at a first CN element side. In addition, the embodiments provided herein may be arbitrarily combined to form new embodiments, all of which are within the protection scope of the disclosure.

The following will describe apparatus embodiments of the disclosure, which may be used for implementing the method embodiments of the disclosure. For details not disclosed in the apparatus embodiments of the disclosure, reference can be made to the method embodiments of the disclosure.

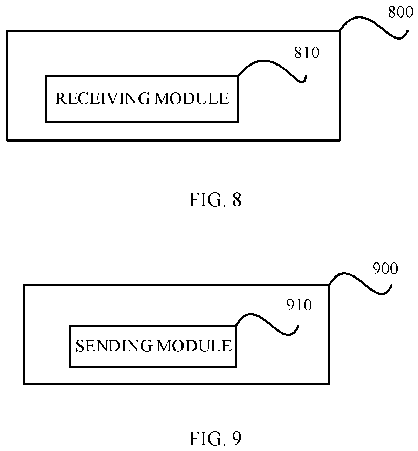

FIG. 8 is a block diagram of an apparatus for information indication provided in an embodiment of the disclosure. The apparatus has a function of implementing the above examples of the method for information indication. The function may be implemented by hardware, or may be implemented by hardware executing corresponding software. The apparatus may be the first device described above, or may be disposed in the first device. As illustrated in FIG. 8, the apparatus 800 may include a receiving module 810. The receiving module 810 is configured to receive first information sent by a first CN element. The first information indicates at least one TAC and/or at least one cell identifier allowed or authorized to be broadcasted by the first device.

In some embodiments, the first information includes at least one of the following information: the at least one TAC allowed or authorized to be broadcasted by the first device, the at least one cell identifier allowed or authorized to be broadcasted by the first device, first S-NSSAI, a first DNN, or geographical location information. The geographical location information includes at least one of: a TAC of an AN device connected with the first device, a cell identifier of the AN device connected with the first device, or longitude and latitude coordinates of a location of the first device.

In some embodiments, the first information is carried in a registration accept message corresponding to a registration request message. The registration request message is sent by the first device and used for requesting to initiate a registration procedure.

In some embodiments, the first information is carried in a downlink NAS transport message. The downlink NAS transport message indicates policy data of the first device.

In some embodiments, the first information is carried in a PDU session establishment accept message. The PDU session establishment accept message indicates that the first CN element accepts a PDU session establishment request from the first device.

In some embodiments, the first information is carried in a PCO; or, the first information is carried in a downlink NAS transport message.

In some embodiments, the apparatus 800 further includes a sending module (not illustrated). The sending module is configured to broadcast the at least one TAC and/or the at least one cell identifier.

According to the technical solutions provided in embodiments of the disclosure, by means of indicating, by a CN element, to the first device the at least one TAC and/or the at least one cell identifier allowed or authorized to be broadcasted by the first device, there is no need for an operator to manually configure a TAC and/or a cell identifier allowed or authorized to be broadcasted by the first device, thereby making a manner of configuring a TAC and a cell identifier more flexible and convenient.

FIG. 9 is a block diagram of an apparatus for information indication provided in an embodiment of the disclosure. The apparatus has a function of implementing the above examples of the method for information indication. The function may be implemented by hardware, or may be implemented by hardware executing corresponding software. The apparatus may be the first CN element described above, or may be disposed in the first CN element. As illustrated in FIG. 9, the apparatus 900 may include a sending module 910. The sending module 910 is configured to send first information to a first device. The first information indicates at least one TAC and/or at least one cell identifier allowed or authorized to be broadcasted by the first device.

In some embodiments, the first information includes at least one of the following information: the at least one TAC allowed or authorized to be broadcasted by the first device, the at least one cell identifier allowed or authorized to be broadcasted by the first device, first S-NSSAI, a first DNN, or geographical location information. The geographical location information includes at least one of: a TAC of an AN device connected with the first device, a cell identifier of the AN device connected with the first device, or longitude and latitude coordinates of a location of the first device.

In some embodiments, the first information is carried in a registration accept message corresponding to a registration request message. The registration request message is sent by the first device and used for requesting to initiate a registration procedure.

In some embodiments, the apparatus further includes a receiving module (not illustrated). The receiving module is configured to receive a first message sent by a second CN element. The first message indicates policy information related to access-and-mobility management, and the policy information related to access-and-mobility management includes at least one of: a TAC allowed or authorized to be broadcasted by the first device, a cell identifier allowed or authorized to be broadcasted by the first device, first S-NSSAI, or a first DNN.

In some embodiments, the first information is carried in a downlink NAS transport message. The downlink NAS transport message indicates policy data of the first device.

In some embodiments, the first information is carried in a PDU session establishment accept message. The PDU session establishment accept message indicates that the first CN element accepts a PDU session establishment request from the first device.

In some embodiments, the first information is carried in a PCO; or, the first information is carried in a downlink NAS transport message.

In some embodiments, the receiving module is further configured to receive the PDU session establishment accept message sent by a third CN element. The PDU session establishment accept message contains at least one of: the at least one TAC allowed or authorized to be broadcasted by the first device, the at least one cell identifier allowed or authorized to be broadcasted by the first device, first S-NSSAI, a first DNN, a PDU session identifier, a QoS flow identifier, a QoS parameter, or a QoS rule.

According to the technical solutions provided in embodiments of the disclosure, by means of indicating, by a CN element, to the first device the at least one TAC and/or the at least one cell identifier allowed or authorized to be broadcasted by the first device, there is no need for an operator to manually configure the TAC and/or the cell identifier allowed or authorized to be broadcasted by the first device, thereby making a manner of configuring a TAC and a cell identifier more flexible and convenient.

It may be noted that, when the apparatus provided in the above embodiments implements functions of the apparatus, the division of various functional modules described above is merely taken as an example for illustration. In practice, the above functions may be allocated to different functional modules for implementation according to actual requirements, that is, the structure of the device is divided into different functional modules to implement all or part of the above functions.

With respect to the apparatus in the above embodiments, the manner in which the modules perform the operations has been described in detail in the embodiments related to the method, and will not be described in detail again herein.

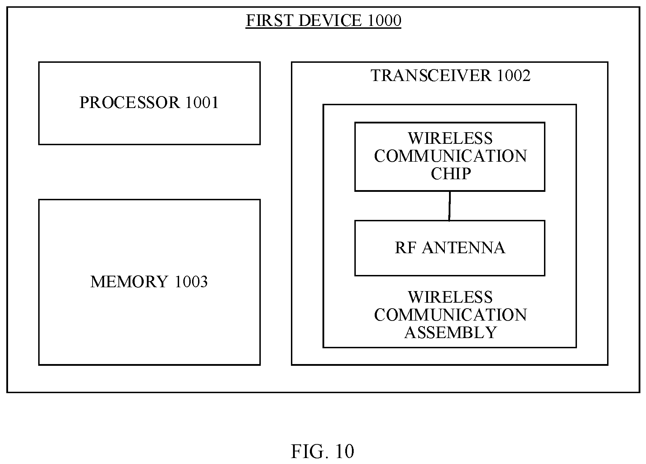

FIG. 10 is a schematic structural diagram of a first device provided in an embodiment of the disclosure. The first device 1000 may include a processor 1001, a transceiver 1002, and a memory 1003. The transceiver 1002 is configured to implement a function of sending or receiving, for example, a function of the receiving module 810 described above. The processor 1001 may be configured to implement other processing functions or control sending and/or receiving.

The processor 1001 includes one or more processing cores. The processor 1001 is configured to execute various function applications and perform information processing by running software programs and modules.

The transceiver 1002 may include at least one of a receiver or a transmitter. For example, the receiver and the transmitter may be implemented as the same wireless communication assembly, where the wireless communication assembly may include a wireless communication chip and a radio frequency (RF) antenna.

The memory 1003 may be connected to the processor 1001 and the transceiver 1002.

The memory 1003 may be configured to store a computer program executed by the processor, and the processor 1001 is configured to execute the computer program to implement various steps in the above method embodiments.

In some embodiments, the transceiver 1002 is configured to receive first information sent by a first CN element. The first information indicates at least one TAC and/or at least one cell identifier allowed or authorized to be broadcasted by the first device.

For details not specified in the embodiment, reference can be made to the above embodiments, which will not be repeated herein.

In addition, the memory may be implemented by any type of volatile storage device or non-volatile storage device or a combination thereof. The volatile storage device or non-volatile storage device includes, but is not limited to, a magnetic disk or an optical disk, an electrically erasable programmable read-only memory (ROM), an erasable programmable ROM, a static random-access memory (RAM), an ROM, a magnetic memory, a flash memory, and a programmable ROM.

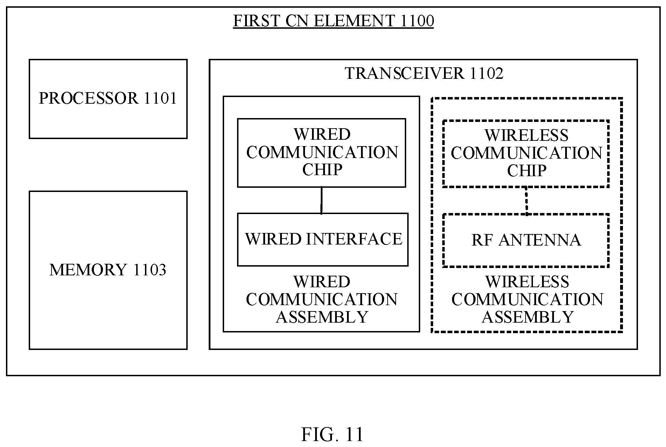

FIG. 11 is a schematic structural diagram of a first CN element provided in an embodiment of the disclosure. The first CN element 1100 may include a processor 1101, a transceiver 1102, and a memory 1103. The transceiver 1102 is configured to implement a function of sending and/or receiving, for example, a function of the sending module 910 and/or the receiving module described above. The processor 1101 is configured to implement functions other than sending and/or receiving or control sending and/or receiving.

The processor 1101 includes one or more processing cores. The processor 1101 is configured to execute various function applications and perform information processing by running software programs and modules. The processor 1101 is configured to perform operations other than the sending and receiving operations performed by the first CN element in the above method embodiments.

The transceiver 1102 may include a receiver and a transmitter. For example, the receiver and the transmitter may be implemented as the same wireless communication assembly, where the wireless communication assembly may include a wireless communication chip and an RF antenna. The transceiver 1102 is configured to perform the sending and/or receiving operations performed by the first CN element in the above method embodiments.

The memory 1103 may be connected to the processor 1101 and the transceiver 1102.

The memory 1103 may be configured to store a computer program executed by the processor, and the processor 1101 is configured to execute the computer program to implement various steps in the above method embodiments at a first CN element side.

In addition, the memory may be implemented by any type of volatile storage device or non-volatile storage device or a combination thereof. The volatile storage device or non-volatile storage device includes, but is not limited to, a magnetic disk or an optical disk, an electrically erasable programmable ROM, an erasable programmable ROM, a static RAM, an ROM, a magnetic memory, a flash memory, and a programmable ROM.

In some embodiments, the transceiver 1102 is configured to send first information to a first device. The first information indicates at least one TAC and/or at least one cell identifier allowed or authorized to be broadcasted by the first device.

For details not specified in the embodiment, reference can be made to the above embodiments, which will not be repeated herein.

A computer-readable storage medium is further provided in embodiments of the disclosure. The storage medium is configured to store a computer program. The computer program is configured to be executed by a processor to implement the above method for information indication at a first device side, or the above method for information indication at a first CN element side. In some embodiments, the computer-readable storage medium may include an ROM, an RAM, a solid state drive (SSD), or an optical disk, etc. The RAM may include a resistance RAM (ReRAM) and a dynamic RAM (DRAM).

A chip is further provided in embodiments of the disclosure. The chip includes programmable logic circuits and/or program instructions. The chip is configured to, when running, implement the above method for information indication at a first device side, or the above method for information indication at a first CN element side,

A computer program product is further provided in embodiments of the disclosure. The computer program product includes a computer program. The computer program is stored in a computer-readable storage medium. The computer program is configured to be read by a processor from the computer-readable storage medium to execute the computer program to implement the above method for information indication at a first device side, or the above method for information indication at a first CN element side.

It may be understood that, "indication" referred to in embodiments of the disclosure may be a direct indication, may be an indirect indication, or may mean that there is an association relationship. For example, A indicates B may mean that A directly indicates B, for instance, B can be obtained according to A; may mean that A indirectly indicates B, for instance, A indicates C, and B can be obtained according to C; or may mean that that there is an association relationship between A and B.

In the elaborations of embodiments of the disclosure, the term "correspondence" may mean that there is a direct or indirect correspondence between the two, may mean that there is an association relationship between the two, or may mean a relationship of indicating and being indicated or configuring and being configured, etc.

In some embodiments of the disclosure, the "pre-defined" can be implemented by pre-saving a corresponding code or table in a device (for example, including the first device and the first CN element) or in other manners that can be used for indicating related information, and the disclosure is not limited in this regard. For example, the "pre-defined" may mean defined in a protocol.

In some embodiments of the disclosure, the "protocol" may refer to a communication standard protocol, which may include, for example, an LTE protocol, an NR protocol, and a protocol applied to a future communication system, and the disclosure is not limited in this regard.

The "multiple" referred to herein refers to two or more than two. The "and/or" describes an association relationship between associated objects, which means that there may be three relationships. For example, A and/or B may mean A alone, both A and B exist, and B alone. The character "/" generally indicates that the associated objects are in an "or" relationship.

As referred to herein, "greater than or equal to" may mean greater than or equal to, or greater than, and "less than or equal to" may mean less than or equal to, or less than.

In addition, the serial numbers of the steps described herein merely exemplarily illustrate a possible execution order between the steps. In some other embodiments, the above steps may not be executed according to the order of the serial numbers, for example, two steps with different serial numbers are performed simultaneously, or two steps with different serial numbers are performed in an order opposite to that illustrated in the figure, and embodiments of the disclosure are not limited in this regard.

Those skilled in the art may appreciate that, in one or more of the above examples, the functions described in the embodiments of the disclosure may be implemented by hardware, software, firmware, or any combination thereof. When implemented by software, the functions may be stored in a computer-readable medium or transmitted as one or more instructions or codes on a computer-readable medium. The computer-readable medium includes a computer storage medium and a communication medium, where the communication medium includes any medium that facilitates transfer of computer programs from one place to another, and the storage medium may be any usable medium that can be accessed by a general purpose computer or a special purpose computer.

The foregoing elaborations are merely exemplary embodiments of the disclosure, but are not intended to limit the disclosure. Any modification, equivalent replacement, and improvement made within the spirit and principle of the disclosure shall belong to the protection scope of the disclosure.

## Claims

1. A method for information indication, performed by a first device and comprising:
receiving first information sent by a first core network (CN) element, wherein the first information indicates at least one tracking area code (TAC) and/or at least one cell identifier allowed or authorized to be broadcasted by the first device.

2. The method of claim 1, wherein the first information comprises at least one of the following information: the at least one TAC allowed or authorized to be broadcasted by the first device, the at least one cell identifier allowed or authorized to be broadcasted by the first device, first single network slice selection assistance information (S-NSSAI), a first data network name (DNN), or geographical location information, wherein the geographical location information comprises at least one of: a TAC of an access network (AN) device connected with the first device, a cell identifier of the AN device connected with the first device, or longitude and latitude coordinates of a location of the first device.

3. The method of claim 1 or 2, wherein the first information is carried in a registration accept message corresponding to a registration request message, wherein the registration request message is sent by the first device and used for requesting to initiate a registration procedure.

4. The method of claim 1 or 2, wherein the first information is carried in a downlink non-access stratum (NAS) transport message, wherein the downlink NAS transport message indicates policy data of the first device.

5. The method of claim 1 or 2, wherein the first information is carried in a protocol data unit (PDU) session establishment accept message, wherein the PDU session establishment accept message indicates that the first CN element accepts a PDU session establishment request from the first device.

6. The method of claim 5, wherein the first information is carried in a protocol configuration option (PCO); or, the first information is carried in a downlink NAS transport message.

7. The method of any one of claims 1 to 6, wherein after receiving the first information sent by the first CN element, the method further comprises:
broadcasting the at least one TAC and/or the at least one cell identifier.

8. A method for information indication, performed by a first core network (CN) element and comprising:
sending first information to a first device, wherein the first information indicates at least one tracking area code (TAC) and/or at least one cell identifier allowed or authorized to be broadcasted by the first device.

9. The method of claim 8, wherein the first information comprises at least one of the following information: the at least one TAC allowed or authorized to be broadcasted by the first device, the at least one cell identifier allowed or authorized to be broadcasted by the first device, first single network slice selection assistance information (S-NSSAI), a first data network name (DNN), or geographical location information, wherein the geographical location information comprises at least one of: a TAC of an access network (AN) device connected with the first device, a cell identifier of the AN device connected with the first device, or longitude and latitude coordinates of a location of the first device.

10. The method of claim 8 or 9, wherein the first information is carried in a registration accept message corresponding to a registration request message, wherein the registration request message is sent by the first device and used for requesting to initiate a registration procedure.

11. The method of claim 10, further comprising:
receiving a first message sent by a second CN element, wherein the first message indicates policy information related to access-and-mobility management, and the policy information related to access-and-mobility management comprises at least one of: a TAC allowed or authorized to be broadcasted by the first device, a cell identifier allowed or authorized to be broadcasted by the first device, first S-NSSAI, or a first DNN.

12. The method of claim 11, wherein the first message is an access-and-mobility policy control create response message.

13. The method of claim 8 or 9, wherein the first information is carried in a downlink non-access stratum (NAS) transport message, wherein the downlink NAS transport message indicates policy data of the first device.

14. The method of claim 8 or 9, wherein the first information is carried in a protocol data unit (PDU) session establishment accept message, wherein the PDU session establishment accept message indicates that the first CN element accepts a PDU session establishment request from the first device.

15. The method of claim 14, wherein the first information is carried in a protocol configuration option (PCO); or, the first information is carried in a downlink NAS transport message.

16. The method of claim 14 or 15, further comprising:
receiving the PDU session establishment accept message sent by a third CN element, wherein the PDU session establishment accept message contains at least one of: the at least one TAC allowed or authorized to be broadcasted by the first device, the at least one cell identifier allowed or authorized to be broadcasted by the first device, first S-NSSAI, a first DNN, a PDU session identifier, a quality of service (QoS) flow identifier, a QoS parameter, or a QoS rule.

17. An apparatus for information indication, comprising:
a receiving module configured to receive first information sent by a first core network (CN) element, wherein the first information indicates at least one tracking area code (TAC) and/or at least one cell identifier allowed or authorized to be broadcasted by the first device.

18. The apparatus of claim 17, wherein the first information comprises at least one of the following information: the at least one TAC allowed or authorized to be broadcasted by the first device, the at least one cell identifier allowed or authorized to be broadcasted by the first device, first single network slice selection assistance information (S-NSSAI), a first data network name (DNN), or geographical location information, wherein the geographical location information comprises at least one of: a TAC of an access network (AN) device connected with the first device, a cell identifier of the AN device connected with the first device, or longitude and latitude coordinates of a location of the first device.

19. The apparatus of claim 17 or 18, wherein the first information is carried in a registration accept message corresponding to a registration request message, wherein the registration request message is sent by the first device and used for requesting to initiate a registration procedure.

20. The apparatus of claim 17 or 18, wherein the first information is carried in a downlink non-access stratum (NAS) transport message, wherein the downlink NAS transport message indicates policy data of the first device.

21. The apparatus of claim 17 or 18, wherein the first information is carried in a protocol data unit (PDU) session establishment accept message, wherein the PDU session establishment accept message indicates that the first CN element accepts a PDU session establishment request from the first device.

22. The apparatus of claim 21, wherein the first information is carried in a protocol configuration option (PCO); or, the first information is carried in a downlink NAS transport message.

23. The apparatus of any one of claims 17 to 22, further comprising:
a sending module configured to broadcast the at least one TAC and/or the at least one cell identifier.

24. An apparatus for information indication, comprising:
a sending module configured to send first information to a first device, wherein the first information indicates at least one tracking area code (TAC) and/or at least one cell identifier allowed or authorized to be broadcasted by the first device.

25. The apparatus of claim 24, wherein the first information comprises at least one of the following information: the at least one TAC allowed or authorized to be broadcasted by the first device, the at least one cell identifier allowed or authorized to be broadcasted by the first device, first single network slice selection assistance information (S-NSSAI), a first data network name (DNN), or geographical location information, wherein the geographical location information comprises at least one of: a TAC of an access network (AN) device connected with the first device, a cell identifier of the AN device connected with the first device, or longitude and latitude coordinates of a location of the first device.

26. The apparatus of claim 24 or 25, wherein the first information is carried in a registration accept message corresponding to a registration request message, wherein the registration request message is sent by the first device and used for requesting to initiate a registration procedure.

27. The apparatus of claim 25, further comprising:
a receiving module configured to receive a first message sent by a second CN element, wherein the first message indicates policy information related to access-and-mobility management, and the policy information related to access-and-mobility management comprises at least one of: a TAC allowed or authorized to be broadcasted by the first device, a cell identifier allowed or authorized to be broadcasted by the first device, first S-NSSAI, or a first DNN.

28. The apparatus of claim 27, wherein the first message is an access-and-mobility policy control create response message.

29. The apparatus of claim 24 or 25, wherein the first information is carried in a downlink non-access stratum (NAS) transport message, wherein the downlink NAS transport message indicates policy data of the first device.

30. The apparatus of claim 24 or 25, wherein the first information is carried in a protocol data unit (PDU) session establishment accept message, wherein the PDU session establishment accept message indicates that the first CN element accepts a PDU session establishment request from the first device.

31. The apparatus of claim 30, wherein the first information is carried in a protocol configuration option (PCO); or, the first information is carried in a downlink NAS transport message.

32. The apparatus of claim 30 or 31, further comprising:
a receiving module configured to receive the PDU session establishment accept message sent by a third CN element, wherein the PDU session establishment accept message contains at least one of: the at least one TAC allowed or authorized to be broadcasted by the first device, the at least one cell identifier allowed or authorized to be broadcasted by the first device, first S-NSSAI, a first DNN, a PDU session identifier, a quality of service (QoS) flow identifier, a QoS parameter, or a QoS rule.

33. A communication device, comprising:
a memory configured to store a computer program; and
a processor configured to execute the computer program to implement the method of any one of claims 1 to 7 or the method of any one of claims 8 to 16.

34. A computer-readable storage medium configured to store a computer program which is executable by a processor to implement the method of any one of claims 1 to 7 or the method of any one of claims 8 to 16.

35. A chip, comprising programmable logic circuits and/or program instructions, wherein when running, the chip is configured to implement the method of any one of claims 1 to 7 or the method of any one of claims 8 to 16.

36. A computer program product, comprising computer instructions which are stored in a computer-readable storage medium, wherein the computer instructions are configured to be read by a processor from the computer-readable storage medium to execute the computer instructions to implement the method of any one of claims 1 to 7 or the method of any one of claims 8 to 16.
